# EUROPÄISCHE PATENTANMELDUNG

(11) **EP 4 679 803 A1**
(43) Veröffentlichungstag der Anmeldung: **14.01.2026**
(21) Anmeldenummer: 25180975.2
(22) Anmeldetag: 05.06.2025
(51) Int. Cl.: H04L 67/12, H04L 67/125, H04Q 9/00, G08C 17/02, H04W 4/80

(54) **SYSTEM UND VERFAHREN ZUM STEUERN EINES MESSGERÄTS**

(30) Priorität: 20.06.2024 DE 102024117510
(71) Anmelder: Netzsch-Gerätebau GmbH, 95100 Selb (DE)
(72) Erfinder: Brunner, Martin, 91576 Konradsreuth (DE); Schöneich, Michael, 95100 Selb (DE); Denner, Thomas, 95100 Selb (DE); Müller, Michael, 92724 Trabitz (DE); Hilpert, Thilo, 95100 Selb (DE); Wohlfahrt, Fabian, 95111 Rehau (DE); Hachmann, Thorsten, 95199 Thierstein (DE)

(57) **Zusammenfassung**

Ein System (10) umfasst eine Vielzahl von Messgeräten (2) in einer Laborumgebung und ein mobiles Endgerät (1) zum Steuern der Messgeräte (2). Das mobile Endgerät (1) ist konfiguriert, eine Drahtlosverbindung mit einem der Vielzahl von Messgeräten (2) herzustellen, eine eindeutige Identifizierung des verbundenen Messgeräts (2) durchzuführen, Daten zum Steuern und/oder Verwalten des identifizierten Messgeräts (2) an das Messgerät (2) zu übertragen und/oder Daten vom identifizierten Messgerät (2) zu empfangen.

## Beschreibung

### GEBIET DER ERFINDUNG

Die vorliegende Erfindung betrifft ein System und ein Verfahren zum Steuern eines Messgeräts.

### ALLGEMEINER STAND DER TECHNIK

Elektronische Messgeräte in einer Laborumgebung und dergleichen weisen üblicherweise einen Berührungsbildschirm und/oder Knöpfe und Tasten zum Steuern und/oder Programmieren des Messgeräts bzw. zum Auslesen von Messdaten und/oder Einstellungen auf. Aufgrund meist geringer Größe solcher Berührungsbildschirme kann jedoch die Benutzerfreundlichkeit solcher Messgeräte beeinträchtigt werden. Außerdem kann der Aufwand zum Steuern, Programmieren oder Auslesen einer Vielzahl gleicher oder gleichartiger Messgeräte sehr groß sein. Insbesondere in einer Laborumgebung mit einer Vielzahl von Messgeräten ergibt sich das Bedürfnis, die Messgeräte möglichst effizient und benutzerfreundlich zu bedienen.

### KURZDARSTELLUNG DER ERFINDUNG

Um das oben beschriebene Problem zu lösen, stellt die vorliegende Erfindung ein System nach Anspruch 1 sowie ein Verfahren zum Steuern eines Messgeräts nach Anspruch 9 bereit. Weitere Aspekte der Erfindung sind Gegenstand der abhängigen Ansprüche, der Zeichnungen und der folgenden Beschreibung von Ausführungsbeispielen.

Ein erfindungsgemäßes System umfasst eine Vielzahl von Messgeräten in einer Laborumgebung und mindestens ein mobiles Endgerät zum Steuern der Messgeräte. Erfindungsgemäß wird unter "Steuern der Messgeräte" auch ein Programmieren der Messgeräte bzw. ein Auslesen von Messdaten oder Einstellungen aus den Messgeräten verstanden. Dadurch, dass ein mobiles Endgerät zum Steuern der Messgeräte bereitgestellt wird, benötigen die Messgeräte selbst keine eigene Steuereinrichtung mehr mit einer Anzeige, wie z.B. einem Bildschirm oder Berührungsbildschirm. Ferner kann auf Knöpfe und/oder Tasten weitgehend verzichtet werden. Hierdurch kann die Komplexität der Messgeräte verringert werden. Ferner können Kosten beim Herstellen der Messgeräte eingespart werden.

Das mobile Endgerät ist konfiguriert eine Drahtlosverbindung mit einem der Vielzahl von Messgeräten herzustellen. Hierzu weisen das mobile Endgerät und die Messgeräte jeweils geeignete Schnittstellen auf. Alternativ kann in bevorzugten Ausführungen der Erfindung auch eine drahtgebundene Kommunikationsverbindung zwischen mobilen Endgerät und Messgeräten hergestellt werden. Hierzu können das mobile Endgerät und die Messgeräte ebenfalls geeignete Schnittstellen, z.B. USB-Schnittstellen, aufweisen.

Das Identifizieren des Messgeräts kann vorzugsweise durch Erfassen von geeigneten Identifizierdaten über dieselbe Drahtlosverbindung wie zum Steuern des Messgeräts ermöglicht werden. Alternativ kann zunächst eine Identifizierung des Messgeräts über einen ersten Weg erfolgen und anschließend eine geeignete Datenverbindung mit dem identifizierten Messgerät hergestellt werden. Die erfassten Identifizierdaten können entsprechend Informationen zum Herstellen der Drahtlosverbindung aufweisen.

Erfindungsgemäß führt das mobile Endgerät eine eindeutige Identifizierung des verbundenen bzw. des zu verbindenden Messgeräts durch. Um ein bestimmtes Messgerät, insbesondere unter einer Vielzahl gleicher oder gleichartiger Messgeräte zu steuern, muss sichergestellt werden, dass eine eindeutige Zuordnung zum gewünschten Messgerät hergestellt wird. Um ein Messgerät eindeutig zu identifizieren, können Identifizierdaten ausgetauscht werden, die z.B. mit einer Tabelle oder dergleichen abgeglichen werden. Die Tabelle kann z.B. auch Informationen zum Herstellen der Drahtlosverbindung enthalten. Insbesondere kann jedes Messgerät eine eindeutige Identifiziernummer oder - Code oder dergleichen aufweisen, die z.B. vom Hersteller oder vom Benutzer vergeben werden kann. Für ein leichteres Erkennen der Messgeräte können z.B. auch Namen durch den Benutzer vergeben werden.

Das mobile Endgerät ist konfiguriert, Daten zum Steuern des identifizierten Messgeräts an das Messgerät zu übertragen und/oder Daten vom identifizierten Messgerät zu empfangen. Die empfangenen Daten können z.B. Messdaten sein, die in der Folge abgespeichert, ausgewertet oder auf sonstige Art und Weise weiterverarbeitet werden können.

Gemäß bevorzugter Ausführungen kann ein Messgerät der Vielzahl von Messgeräten ein elektronisches Gerät sein, das insbesondere in einer Laborumgebung verwendet wird, wie z.B. ein thermisches Analysegerät und/oder ein Wärmeleitfähigkeitsprüfer und/oder ein Rheometer und/oder ein Brandprüfgerät.

Ein bevorzugtes System umfasst einen Server, der kommunikativ über ein Intranet oder Internet mit der Vielzahl von Messgeräten und/oder mit dem mobilen Endgerät verbunden ist. Der Server kann ein Speichermedium zum Speichern der Daten umfassen und/oder es kann ein Cloudspeicher mit dem Server und/oder dem System kommunikativ verbunden sein. Der Server kann z.B. eine Tabelle mit Identifizierinformationen speichern. In der Tabelle können auch verständliche Namen für Messgeräte gespeichert werden. Ferner kann der Server Messdaten der Messgeräte und/oder Daten zum Steuern und/oder Programmieren der Messgeräte speichern. Auf diese Daten kann beispielsweise auch über sonstige Endgeräte, wie z.B. ein Desktop-Computer oder Laptop zugegriffen werden, um z.B. Messdaten einer Vielzahl von Messgeräten auszuwerten. Der Server kann über ein Intranet angebunden sein, um eine Sicherheit der Daten zu erhöhen.

Vorzugsweise speichert der Server Identifizierinformationen und das mobile Endgerät kann konfiguriert sein, die Identifizierinformationen in Abhängigkeit von Daten, die das Messgerät an das mobile Endgerät überträgt, vom Server abzurufen.

Die Messgeräte sind vorzugsweise konfiguriert, nach dem erfolgreichen Identifizieren durch das mobile Endgerät ein akustisches und/oder optisches Signal an einen Benutzer auszugeben, um dem Benutzer eine Bestätigung über das erfolgreiche Identifizieren zu geben. Zum Ausgeben eines akustischen Signals kann das Messgerät einen geeigneten Lautsprecher aufweisen. Zum Ausgeben eines optischen Signals kann das Messgerät eine geeignete Anzeige und/oder LED oder dergleichen aufweisen. Dadurch, dass am zu identifizierenden Messgerät eine akustische und/oder optische Ausgabe erfolgt, kann der Benutzer eindeutig verifizieren, dass das richtige Messgerät identifiziert wurde. Somit kann die Zuverlässigkeit des Systems verbessert werden.

Alternativ oder zusätzlich kann das mobile Endgerät ebenfalls einen akustischen und/oder optischen Hinweis ausgeben, um dem Benutzer das erfolgreiche Identifizieren zu bestätigen.

Das mobile Endgerät kann konfiguriert sein, die Drahtlosverbindung mit dem Messgerät mittels RFID, Bluetooth, NFC oder WLAN herzustellen. Hierzu wird das mobile Endgerät vorzugsweise auf eine Distanz von weniger als 10 cm an das Messgerät angenähert. In der Folge kann die Drahtlosverbindung zwischen dem mobilen Endgerät und dem gewünschten Messgerät vorzugsweise automatisch, d.h. ohne weitere Eingabe des Benutzers, hergestellt werden. Das erfolgreiche Herstellen der Drahtlosverbindung kann dem Benutzer vorzugsweise am mobilen Endgerät und/oder am Messgerät mittels einer optischen und/oder akustischen Ausgabe bestätigt werden.

Das mobile Endgerät kann vorzugsweise eine Leseeinrichtung aufweisen, um einen QR-Code oder ein RFID-Tag oder ein sonstiges geeignetes Merkmal zum eindeutigen Identifizieren des Messgeräts zu erfassen. Zum Auslesen eines am Messgerät angebrachten QR-Codes kann das mobile Endgerät z.B. eine Kamera aufweisen. Zum Auslesen eines RFID-Tags kann das mobile Endgerät eine geeignete NFC-Schnittstelle aufweisen.

Das mobile Endgerät kann beispielsweise ein Laptop, ein Smartphone, eine Smartwatch oder ein Tablet-Computer sein. Das mobile Endgerät umfasst vorzugsweise einen Berührungsbildschirm, einen Prozessor, eine Kommunikationsschnittstelle und einen Speicher.

Das Durchführen der eindeutigen Identifizierung des Messgeräts umfasst vorzugsweise einen Schritt zum Durchführen einer Nahfeldkommunikation zwischen Messgerät und mobilen Endgerät beim Annähern des mobilen Endgeräts an das Messgerät und einen Schritt zum Ausgeben eines optischen und/oder akustischen Signals durch das Messgerät, wenn das Messgerät erfolgreich identifiziert wurde. Somit kann der Benutzer in vorteilhafter Weise erkennen, wenn das Identifizieren des Messgeräts erfolgreich war.

### KURZBESCHREIBUNG DER ZEICHNUNGEN

Die Erfindung wird ausführlicher mit Verweis auf beispielhafte Ausführungsformen beschrieben, die in den beiliegenden Zeichnungen dargestellt sind.

Die beiliegenden Zeichnungen sind enthalten, um ein weiteres Verständnis dieser Erfindung zu ermöglichen und sind in diese Beschreibung einbezogen und stellen einen Teil davon dar. Die Zeichnungen illustrieren die Ausführungsformen dieser Erfindung und dienen gemeinsam mit der Beschreibung der Erklärung der Grundsätze der Erfindung. Andere Ausführungsformen dieser Erfindung und viele der vorgesehenen Vorteile dieser Erfindung sind leicht zu verstehen, wenn sie durch Verweis auf die folgende ausführliche Beschreibung besser verständlich werden. Die Elemente der Zeichnungen sind nicht notwendigerweise im gleichen Maßstab zueinander gezeichnet. Gleiche Bezugszeichen bezeichnen entsprechend ähnliche Teile.
- Fig. 1: zeigt eine schematische Ansicht eines Systems mit einer Vielzahl von Messgeräten, einem mobilen Endgerät und einem Server in einer Laborumgebung; und
- Fig. 2: illustriert ein erfindungsgemäßes Verfahren.

In den Figuren bezeichnen gleiche Bezugszeichen gleiche oder funktional ähnliche Bauteile, wenn nicht anders angegeben. Alle Richtungsbezeichnungen, wie "oben", "unten", "links", "rechts", "über", "unter", "horizontal", "vertikal", "hinten", "vorne" und ähnliche Begriffe werden nur zur Erklärungszwecken verwendet und sollen die Ausführungsformen nicht auf die spezifischen Anordnungen beschränken, die in den Zeichnungen dargestellt sind.

### AUSFÜHRLICHE BESCHREIBUNG DER ERFINDUNG

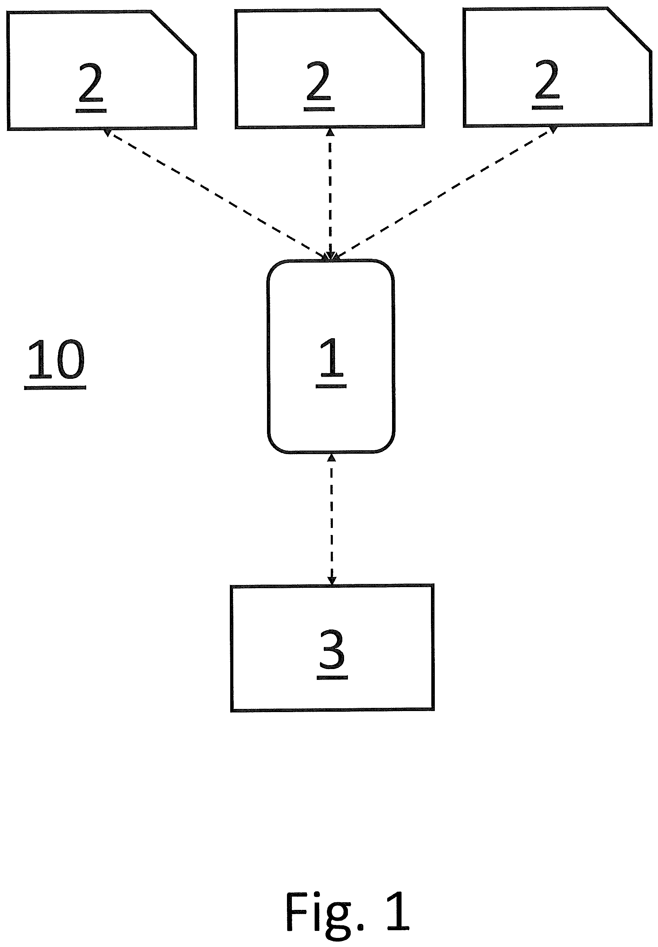

Fig. 1 zeigt eine schematische Ansicht eines Systems 10 mit einer Vielzahl von Messgeräten 2, einem mobilen Endgerät 1 und einem Server 3 in einer Laborumgebung. Das mobile Endgerät 1 ist hier beispielsweise ein besonders einfach zu bedienendes Tablet 1 mit einem Berührungsbildschirm. Das Tablet 1 umfasst eine Schnittstelle für drahtlose Kommunikation, z.B. über Bluetooth oder WLAN. Ferner umfasst das Tablet eine Kamera und eine Schnittstelle für Nahfeldkommunikation (NFC), sowie einen Prozessor und einen Speicher. Die Messgeräte 2 umfassen jeweils entsprechende Schnittstellen zum Kommunizieren mit dem Tablet 1.

Das Identifizieren eines Messgeräts 2 erfolgt durch das Erfassen geeigneter Identifizierdaten, insbesondere über dieselbe Drahtlosverbindung wie zum Steuern des Messgeräts 2. Alternativ kann zunächst eine Identifizierung des Messgeräts 2 über einen ersten Weg erfolgen und anschließend eine geeignete Datenverbindung vom Tablet 1 mit dem identifizierten Messgerät 2 hergestellt werden. Die hierbei erfassten Identifizierdaten können entsprechend Informationen zum Herstellen der Drahtlosverbindung aufweisen.

Das Tablet 1 kann eine eindeutige Identifizierung des verbundenen bzw. des zu verbindenden Messgeräts 2 durchführen. Um ein bestimmtes Messgerät 2 unter der Vielzahl gleicher oder gleichartiger Messgeräte 2 zu steuern, muss sichergestellt werden, dass eine eindeutige Zuordnung zum gewünschten Messgerät 2 hergestellt wird. Um das Messgerät 2 eindeutig zu identifizieren, werden Identifizierdaten ausgetauscht, die z.B. mit einer Tabelle oder dergleichen abgeglichen werden. Die Tabelle kann z.B. auch Informationen zum Herstellen der Drahtlosverbindung enthalten. Insbesondere kann jedes Messgerät 2 eine eindeutige Identifiziernummer oder -Code oder dergleichen aufweisen, die z.B. vom Hersteller oder vom Benutzer vergeben werden kann. Für ein leichteres Erkennen der Messgeräte 2 können z.B. auch Namen durch den Benutzer vergeben werden.

Das Tablet 1 kann Daten zum Steuern des identifizierten Messgeräts 2 an das Messgerät 2 übertragen und/oder Daten vom identifizierten Messgerät 2 empfangen. Die empfangenen Daten können z.B. Messdaten sein, die in der Folge abgespeichert, ausgewertet oder auf sonstige Art und Weise weiterverarbeitet werden können. Die Messdaten können auch auf einen Server 3 übertragen und von dort abgerufen werden. Alternativ können die Messdaten auch auf ein Speichermedium oder an einen Cloudspeicher übertragen und von dort abgerufen werden.

Die Messgeräte 2 sind elektronische Geräte, die in einer Laborumgebung verwendet werden. Beispielsweise umfasst die Vielzahl von Messgeräten 2 ein thermisches Analysegerät und/oder ein Wärmeleitfähigkeitsprüfer und/oder ein Rheometer und/oder ein Brandprüfgerät.

Das System 10 umfasst einen Server 3, der kommunikativ über ein Intranet oder Internet oder ein sonstiges geeignetes Netzwerk mit der Vielzahl von Messgeräten 2 und/oder mit dem Tablet 1 verbunden bzw. verbindbar ist. Der Server 3 kann z.B. eine Tabelle mit Identifizierinformationen speichern. In der Tabelle können auch durch den Benutzer vorgegebene Namen für Messgeräte 2 gespeichert werden. Ferner kann der Server 3 Messdaten der Messgeräte 2 und/oder Daten zum Steuern und/oder Programmieren der Messgeräte 2 speichern. Auf diese Daten kann beispielsweise auch über sonstige Endgeräte 1, wie z.B. ein Desktop-Computer oder Laptop zugegriffen werden, um z.B. Messdaten einer Vielzahl von Messgeräten 2 auszuwerten.

Die Messgeräte 2 können nach einem erfolgreichen Identifizieren durch das Tablet 1 ein akustisches und/oder optisches Signal an einen Benutzer auszugeben, um dem Benutzer eine Bestätigung über das erfolgreiche Identifizieren auszugeben. Zum Ausgeben des akustischen Signals können die Messgeräte 2 jeweils einen Lautsprecher aufweisen. Zum Ausgeben des optischen Signals können die Messgeräte 2 eine Anzeige und/oder LED oder dergleichen aufweisen. Dadurch, dass am zu identifizierenden Messgerät 2 eine akustische und/oder optische Ausgabe erfolgt, kann der Benutzer eindeutig verifizieren, dass das richtige Messgerät 2 identifiziert wurde. Hierdurch kann die Zuverlässigkeit des Systems 10 verbessert werden.

Ferner kann auch das Tablet 1 einen akustischen und/oder optischen Hinweis ausgeben, um dem Benutzer das erfolgreiche Identifizieren zu bestätigen.

Das Tablet 1 kann die Drahtlosverbindung mit dem Messgerät 2 insbesondere mittels RFID, Bluetooth, NFC oder WLAN herstellen. Hierzu wird das Tablet 1 beispielsweise auf eine Distanz von weniger als 10 cm an das Messgerät 2 angenähert. In der Folge kann die Drahtlosverbindung zwischen dem Tablet 1 und dem gewünschten Messgerät 2 automatisch, d.h. ohne weitere Eingabe des Benutzers, hergestellt werden. Das erfolgreiche Herstellen der Drahtlosverbindung wird dem Benutzer am Tablet 1 und/oder am Messgerät 2 mittels einer optischen und/oder akustischen Ausgabe bestätigt.

Das Tablet 1 weist ferner eine Leseeinrichtung auf, um z.B. einen QR-Code oder ein RFID-Tag oder ein sonstiges geeignetes Merkmal zum eindeutigen Identifizieren des Messgeräts 2 zu erfassen. Zum Auslesen eines am Messgerät 2 angebrachten QR-Codes kann das Tablet 1 z.B. eine Kamera aufweisen. Zum Auslesen eines RFID-Tags kann das Tablet 1 eine geeignete NFC-Schnittstelle aufweisen.

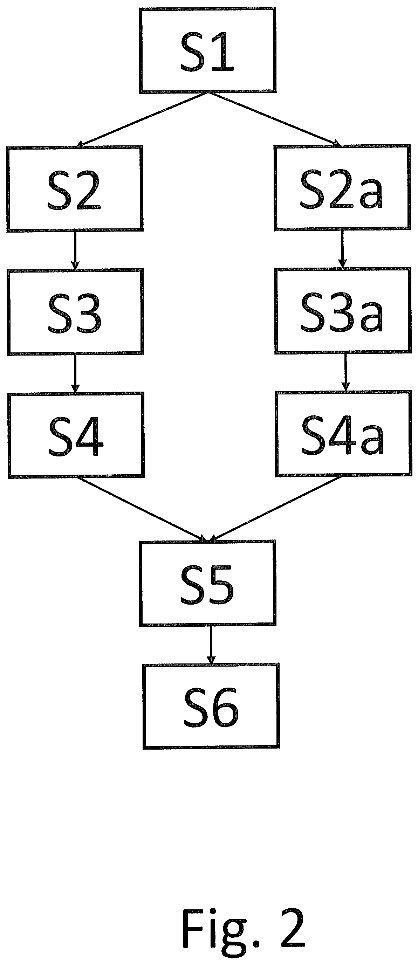

Fig. 2 illustriert ein erfindungsgemäßes Verfahren zum Verfahren zum Steuern eines Messgeräts. Im ersten Schritt S1 wird das Tablet 1 an das Messgerät 2 angenähert. Der zweite Schritt S2 dient zum Erfassen von Identifizierdaten des Messgeräts 2 durch das Tablet 1. Im dritten Schritt S3 wird eine eindeutige Identifizierung des Messgeräts 2 anhand der Identifizierdaten durchgeführt. Anschließend wird in Schritt S4 eine Drahtlosverbindung mit dem identifizierten Messgerät 2 hergestellt.

Alternativ zu Schritten S2 bis S4 kann in einem Schritt S2a zunächst eine Drahtlosverbindung mit dem Messgerät 2 hergestellt werden. Dann werden in Schritt S3a Identifizierdaten des Messgeräts 2 über die Drahtlosverbindung an das Tablet 1 übertragen. In Schritt S4a wird die eindeutige Identifizierung des Messgeräts 2 anhand der Identifizierdaten durchgeführt.

In Schritt S5 werden Daten zum Steuern des Messgeräts 2 vom Tablet 1 über die Drahtlosverbindung an das identifizierte Messgerät 2 übertragen. In einem optionalen Schritt S6 können Messdaten vom Messgerät 2 über die Drahtlosverbindung an das Tablet 1 übertragen werden.

Der Schritt S3 bzw. S4a zum Durchführen der eindeutigen Identifizierung des Messgeräts 2 kann einen Schritt zum Durchführen einer Nahfeldkommunikation zwischen Messgerät 2 und Tablet 1 beim Annähern S1 des Tablet 1 an das Messgerät 2 umfassen. Ferner kann das optische und/oder akustischen Signal durch das Messgerät 2 (und/oder durch das Tablet 1) ausgegeben werden, wenn das Messgerät 2 erfolgreich identifiziert wurde.

### Liste der Referenzzeichen

- 1: mobiles Endgerät
- 2: Messgerät
- 3: Server
- 10: System

- S1-S6: Verfahrensschritte

## Patentansprüche

1. System (10), umfassend:
eine Vielzahl von Messgeräten (2) in einer Laborumgebung; und
ein mobiles Endgerät (1) zum Steuern der Messgeräte (2), wobei das mobile Endgerät (1) konfiguriert ist:
eine Drahtlosverbindung mit einem der Vielzahl von Messgeräten (2) herzustellen, Identifizierdaten vom Messgerät (2) über die Drahtlosverbindung zu empfangen und eine eindeutige Identifizierung des verbundenen Messgeräts (2) anhand der Identifizierdaten durchzuführen; oder
Identifizierdaten eines gewünschten Messgeräts (2) zu erfassen, eine eindeutige Identifizierung eines gewünschten Messgeräts (2) anhand der Identifizierdaten durchzuführen und eine Drahtlosverbindung mit dem identifizierten Messgerät (2) herzustellen; und
Daten zum Steuern des identifizierten Messgeräts (2) über die Drahtlosverbindung an das Messgerät (2) zu übertragen; und
Daten vom identifizierten Messgerät (2) über die Drahtlosverbindung zu empfangen.

2. System (10) nach Anspruch 1, wobei die Vielzahl von Messgeräten (2) ein thermisches Analysegerät oder einen Wärmeleitfähigkeitsprüfer oder ein Rheometer oder ein Brandprüfgerät oder eine Kombination solcher Messgeräte umfasst.

3. System (10) nach Anspruch 1 oder 2, ferner umfassend:
einen Server (3), ein Speichermedium oder einen Cloudspeicher, der kommunikativ über ein Intranet oder Internet mit der Vielzahl von Messgeräten (2) und mit dem mobilen Endgerät (1) verbunden ist.

4. System (10) nach Anspruch 3, wobei der Server (3) Identifizierinformationen speichert und das mobile Endgerät (1) konfiguriert ist, die Identifizierinformationen in Abhängigkeit von Daten, die das Messgerät (2) an das mobile Endgerät (1) überträgt, vom Server (3) abzurufen.

5. System (10) nach einem der vorhergehenden Ansprüche, wobei die Vielzahl von Messgeräten (2) konfiguriert ist, nach dem erfolgreichen Identifizieren durch das mobile Endgerät (1) ein akustisches und/oder optisches Signal an einen Benutzer auszugeben.

6. System (10) nach einem der vorhergehenden Ansprüche, wobei das mobile Endgerät (1) konfiguriert ist, die Drahtlosverbindung mit dem Messgerät (1) mittels RFID, Bluetooth, NFC oder WLAN herzustellen.

7. System (10) nach einem der vorhergehenden Ansprüche, wobei das mobile Endgerät (1) eine Leseeinrichtung aufweist, um einen QR-Code oder ein RFID-Tag zum eindeutigen Identifizieren des Messgeräts (2) zu erfassen.

8. System (10) nach einem der vorhergehenden Ansprüche, wobei das mobile Endgerät (1) ein Laptop, ein Smartphone, eine Smartwatch oder ein Tablet-Computer ist.

9. Verfahren zum Steuern eines Messgeräts (2) mit:
Annähern (S1) eines mobilen Endgeräts (1) an das Messgerät (2); Erfassen (S2) von Identifizierdaten des Messgeräts (2) durch das mobile Endgerät (1) und Durchführen (S3) einer eindeutigen Identifizierung des Messgeräts (2) anhand der Identifizierdaten und Herstellen (S4) einer Drahtlosverbindung mit dem identifizierten Messgerät (2);
Übertragen (S5) von Daten zum Steuern des Messgeräts (2) vom mobilen Endgerät (1) über die Drahtlosverbindung an das identifizierte Messgerät (2); und/oder
Übertragen (S6) von Messdaten vom Messgerät (2) über die Drahtlosverbindung an das mobile Endgerät (1).

10. Verfahren zum Steuern eines Messgeräts (2) mit:
Annähern (S1) eines mobilen Endgeräts (1) an das Messgerät (2);
Herstellen (S2a) einer Drahtlosverbindung mit dem Messgerät (2) und Übertragen (S3a) von Identifizierdaten des Messgeräts (2) an das mobile Endgerät (1) über die Drahtlosverbindung und Durchführen (S4a) einer eindeutigen Identifizierung des Messgeräts (2) anhand der Identifizierdaten;
Übertragen (S5) von Daten zum Steuern des Messgeräts (2) vom mobilen Endgerät (1) über die Drahtlosverbindung an das identifizierte Messgerät (2); und/oder
Übertragen (S6) von Messdaten vom Messgerät (2) über die Drahtlosverbindung an das mobile Endgerät (1).

11. Verfahren nach Anspruch 9 oder 10, wobei das Durchführen (S3; S4a) der eindeutigen Identifizierung des Messgeräts (2) umfasst:
Durchführen einer Nahfeldkommunikation zwischen Messgerät (2) und mobilen Endgerät (1) beim Annähern des mobilen Endgeräts (1) an das Messgerät (2); und
Ausgeben eines optischen und/oder akustischen Signals durch das Messgerät (2), wenn das Messgerät (2) erfolgreich identifiziert wurde.
